# FASCICULE DE BREVET EUROPEEN

(11) **EP 1 288 075 B1**
(45) Date de publication et mention de la délivrance du brevet: **26.12.2007**
(21) Numéro de dépôt: 02356162.4
(22) Date de dépôt: 26.08.2002
(51) Int. Cl.: B60R 3/00

(54) **Plaque rigide d'habillage d'une marche et marchepied pourvu de cette plaque**
Starrer Belag für eine Trittstufe und Trittbrett mit diesem Belag
Rigid step cover, and running board with this cover

(30) Priorité: 27.08.2001 FR 0111146
(43) Date de publication de la demande: 05.03.2003
(73) Titulaire: Inoplast, 07100 Annonay (FR)
(72) Inventeur: Savin, René, 42390 Villars (FR); Ben Salah, Karim, 07340 Saint-Desirat (FR)
(74) Mandataire: Remy, Vincent Noel Paul

(56) Documents cités:
- WO-A-01/02214
- DE-C- 452 319
- US-A- 2 084 025
- US-A- 2 367 657
- US-A- 5 286 049
- US-A- 5 382 035
- PATENT ABSTRACTS OF JAPAN vol. 1998, no. 02, 30 janvier 1998 (1998-01-30) & JP 09 267775 A (TOYODA GOSEI CO LTD), 14 octobre 1997 (1997-10-14)
- PATENT ABSTRACTS OF JAPAN vol. 2000, no. 02, 29 février 2000 (2000-02-29) & JP 11 310083 A (AISIN SEIKI CO LTD), 9 novembre 1999 (1999-11-09)
- PATENT ABSTRACTS OF JAPAN vol. 1997, no. 07, 31 juillet 1997 (1997-07-31) & JP 09 071186 A (TOYODA GOSEI CO LTD), 18 mars 1997 (1997-03-18)

## Description

La présente invention concerne une plaque d'habillage d'une marche, ainsi qu'un marchepied pourvu de cette plaque d'habillage et pouvant équiper, par exemple, un véhicule terrestre, aérien ou nautique.

Au sens où on l'entend ici, un marchepied est un dispositif d'accès à une zone supérieure d'un véhicule.

Les marches des marchepieds connus sont généralement métalliques. Par exemple, elles peuvent être réalisées en tôle emboutie et être fixées au moyen de soudures ou de boulons sur une structure métallique. Il peut également s'agir de pièces en aluminium moulé par coulée ou par injection.

Outre qu'ils sont lourds, les marchepieds réalisés à partir de telles marches métalliques présentent l'inconvénient d'être coûteux. On connaît également dans l'état de la technique, notamment d'après US-5 382 035, une pièce d'habillage conforme au préambule de la revendication 1.

L'invention, qui entend remédier à cet inconvénient, a donc pour but de réduire le coût d'un marchepied.

A cet effet, elle a pour objet une pièce d'habillage conforme à la revendication 1.

D'autres caractéristiques avantageuses de cette plaque d'habillage sont définies par les revendications 2 à 6.

L'invention a également pour objet un marchepied conforme à la revendication 7.

D'autres caractéristiques avantageuses de ce marchepied sont définies par les revendications 8 à 12.

L'invention sera bien comprise à la lecture de la description qui va suivre, donnée uniquement à titre d'exemple et faite en se référant aux dessins annexés, sur lesquels :
- la figure 1 est une vue éclatée, en perspective, d'un marchepied conforme à l'invention et équipé d'une plaque d'habillage conforme à l'invention ;
- les figures 2 et 3 sont deux vues différentes, en perspective, d'une plaque d'habillage conforme à l'invention et faisant partie du marchepied représenté à la figure 1 ;
- la figure 4 est une vue partielle, en coupe selon les plans IVa à IVc de la figure 1, et illustre une étape de l'assemblage de la plaque d'habillage des figures 2 et 3 sur le marchepied de la figure 1 ;
- la figure 5 est une vue qui est analogue à celle de la figure 4 et sur laquelle la plaque d'habillage des figures 2 et 3 est assemblée sur le marchepied des figures 1 et 4 ; et
- la figure 6 est une vue partielle en coupe selon le plan VI de la figure 1, et illustre la manière dont est monté le marchepied des figures 1, 4 et 5 sur un élément de structure d'un camion.

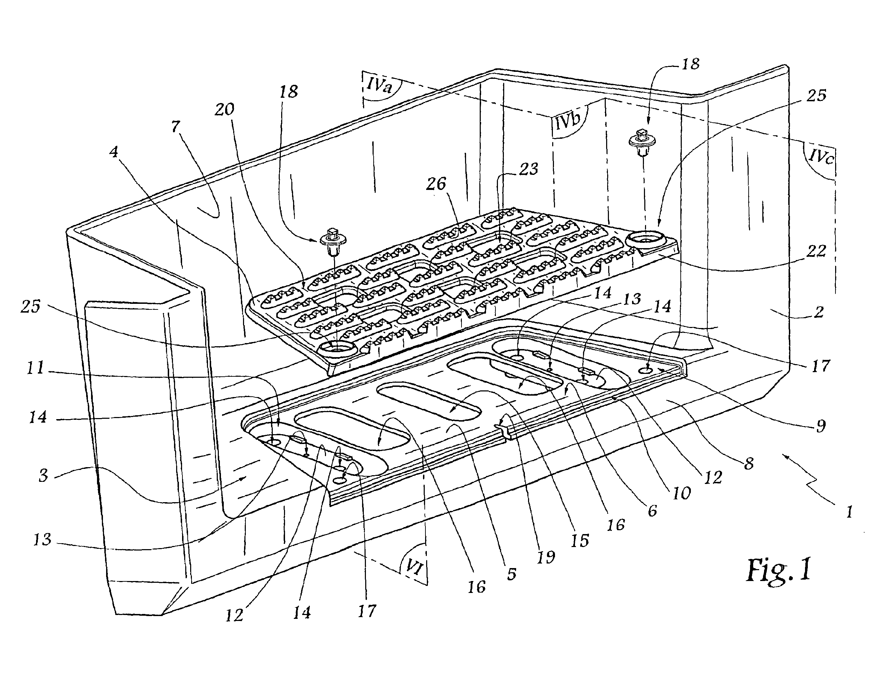

La figure 1 représente un marchepied 1 conforme à l'invention, destiné à être monté sur un camion. Il comporte, d'une part, un corps 2 définissant une marche 3 et, d'autre part, une plaque rigide 4 d'habillage de cette marche 3.

Dans l'ensemble de la demande, les termes « avant » et « arrière » se réfèrent à la manière dont un utilisateur faisant face au marchepied 1 perçoit ce marchepied 1.

Le corps 2 est une coque d'un seul tenant, formant un élément de carrosserie du camion. Il est réalisé dans une matière synthétique composite, comme une résine polyester ou vinylester, dans laquelle sont avantageusement noyées des fibres de renforcement telles que des fibres de verre ou autres. Il peut également être réalisé par injection de matière thermoplastique, éventuellement chargée en fibres de renforcement ou en particules minérales.

Ce corps 2 comporte une paroi sensiblement horizontale 5, qui définit la face supérieure 6 de la marche 3 et se prolonge par une paroi verticale 7 s'étendant vers le haut et par une paroi avant 8 s'étendant sensiblement vers le bas puis se courbant vers l'arrière. La paroi verticale 7 suit le contour de la paroi horizontale 5, sur les côtés et à l'arrière de celle-ci.

La marche 3 comporte une portion en retrait 9, dans laquelle est logée la plaque d'habillage 4, au contour sensiblement complémentaire. Cette portion en retrait 9 couvre l'essentiel de la face supérieure 6 et se prolonge sur une faible hauteur de la paroi avant 8, où elle forme un épaulement 10. Elle comporte deux creux allongés 11, dont les fonds plats respectifs forment deux embases 12 de fixation du corps 2 sur la structure du camion. Ces deux embases de fixation 12 sont latéralement écartées l'une de l'autre et percées chacune d'un trou central 13 et de deux trous avant et arrière 14.

Entre les embases de fixation 12, se succèdent trois ouvertures allongées s'étendant selon la direction avant-arrière du marchepied 1. On note 15 celle qui est au centre et 16 les deux autres.

Deux trous 17 pour le passage de moyens 18 de fixation de la plaque d'habillage 4 sur le corps 2 sont respectivement percés aux deux coins avant de la portion en retrait 9, dans la paroi horizontale 5.

Une fente 19 de positionnement de la plaque est percée dans la paroi horizontale 5 et dans la paroi avant 8.

La plaque d'habillage 4 est réalisée en matière plastique moulée par injection et/ou renforcée par incorporation de charges minérales ou de fibres telles que des fibres de verre. De préférence, cette matière plastique est une matière recyclable pouvant faire partie de la famille des polyoléfines PP (polypropylène), de celle des polybutadiènes thérephtalate (PBT ou PET) ou de la famille des polyamides (PA), ou bien encore de celle des styrèniques (ABS, ASA, PC/ASA).

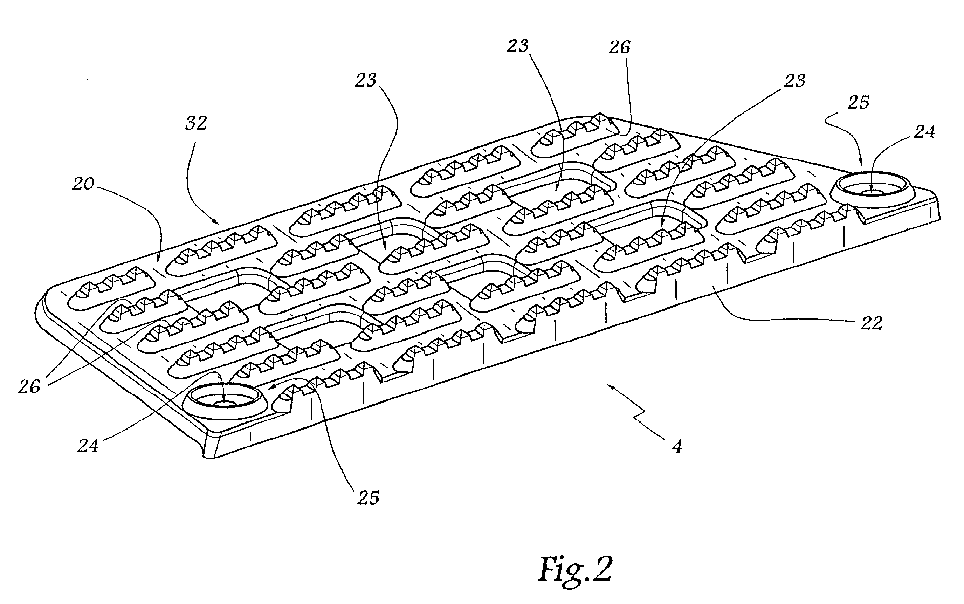

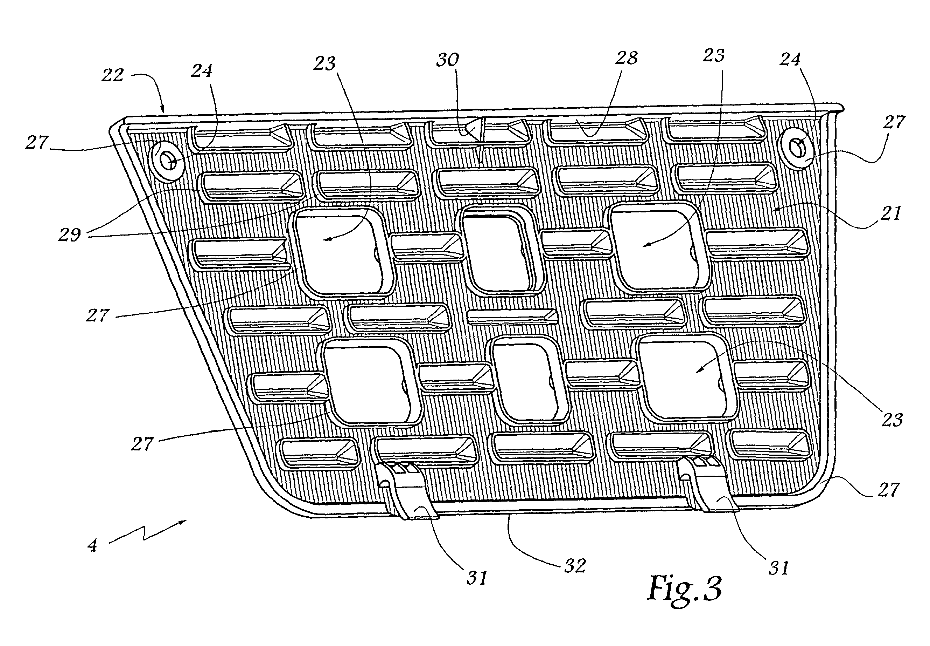

Sur la figure 2, cette plaque 4 est vue par sa face supérieure 20, tandis qu'elle est vue par sa face inférieure 21 sur la figure 3. Elle a globalement la forme d'un trapèze isocèle, dont la base est constituée par son bord avant 22. Elle est percée de trois rangées parallèles de deux ouvertures 23 d'évacuation des matières pouvant la souiller.

Deux trous 24 pour le passage des moyens de fixation 18 sont également prévus dans la plaque 4 et sont respectivement disposés aux deux coins avants de celle-ci. Chacun de ces deux trous 24 débouche au centre d'une coupelle 25.

L'ensemble de la face supérieure 20 est muni de rangées de crampons en saillie 26.

Afin d'éviter la formation de retassures sur la face supérieure 20, la face inférieure 21 de la plaque 4 est pourvue de rebords en saillie vers le bas, qui sont référencés 27, sauf au niveau du bord avant 22 où il s'agit d'une paroi verticale 28 formant butée d'arrêt de la plaque 4 vers l'arrière.

Les crampons 26 sont creux et définis par des parois dont la plupart se prolongent vers le bas au-delà de la face inférieure 21. La référence 29 désigne les portions de ces parois qui dépassent vers le bas, rigidifient les crampons 26 et sont destinées à transmettre, à la paroi horizontale 5 de la marche 3, les charges que supporteront ces crampons 26.

Selon un aspect avantageux mais non représenté de l'invention, les crampons 26 longeant le bord avant 22 sont inclinés vers l'avant de la plaque 4, afin de permettre un meilleur accrochage de la semelle d'un utilisateur.

Une nervure 30 de positionnement de la plaque 4 relie la face inférieure 21 à la paroi verticale 28.

La plaque d'habillage 4 est une pièce d'usure économique, destinée à être facilement remplacée et donc à être montée de manière amovible. A cet effet, elle comporte deux pattes 31 disposées à proximité de son bord arrière 32 et écartées l'une de l'autre. Chaque patte 31 a globalement la forme d'un crochet, puis s'incline vers l'arrière, sensiblement parallèlement à la face inférieure 21, et enfin s'incurve vers le bas.

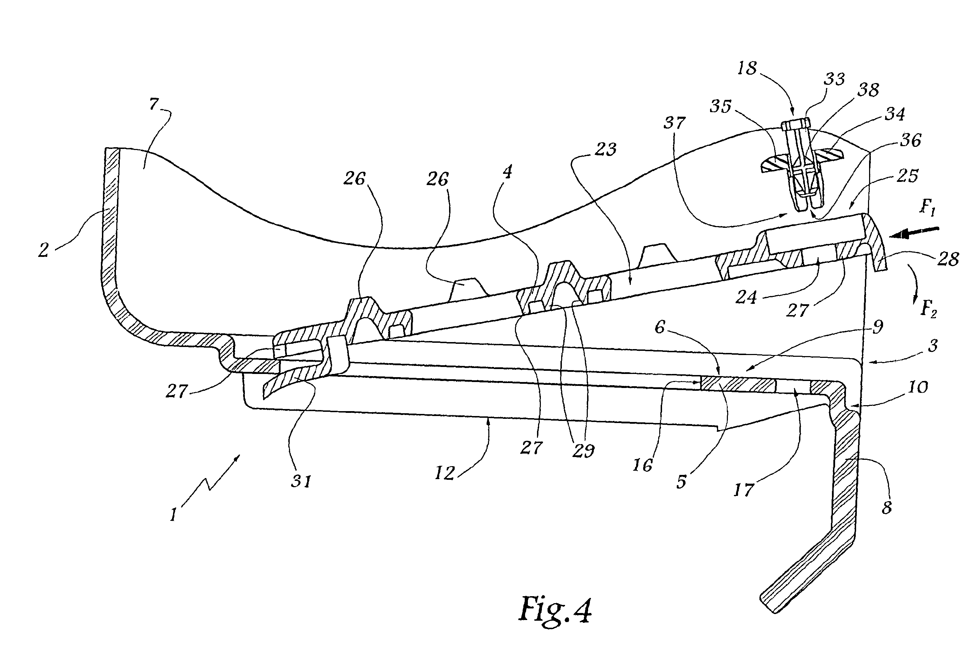

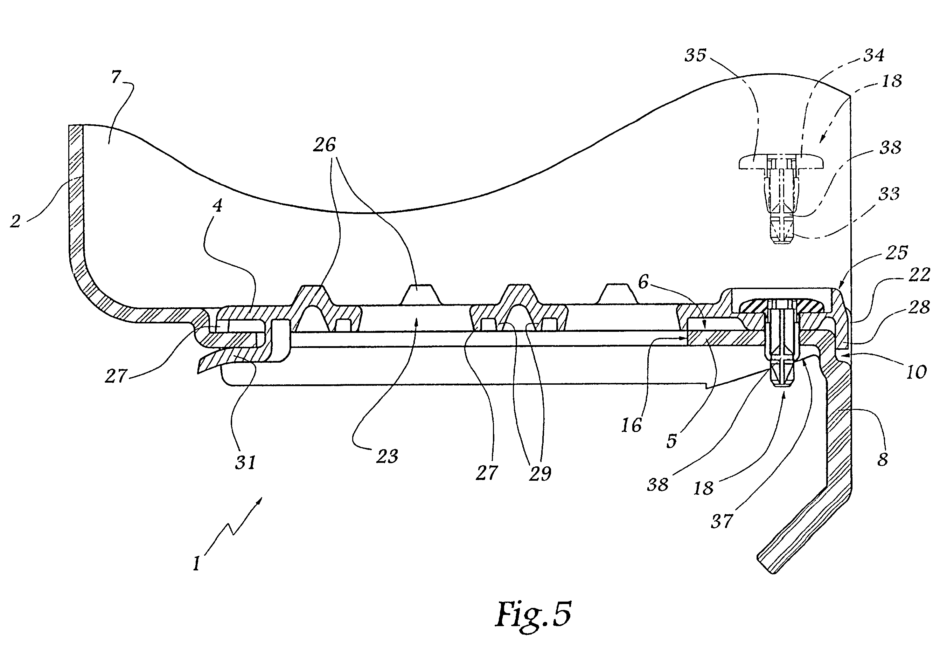

Les moyens de fixation 18, représentés plus en détail sur les figures 4 et 5, comportent un noyau 33 coulissant dans un fourreau 34. Une extrémité de ce fourreau 34 comporte une collerette 35 formant butée. Le fourreau 34 comporte des fentes longitudinales 36 qui s'étendent sur une partie de sa longueur à partir de son extrémité 37 opposée à la collerette 35 et sont angulairement décalées les unes des autres. Au niveau de l'extrémité 37, la section du passage pour le noyau 33 est réduite.

Une portion 38 de plus grande section est prévue sur le noyau 33, à distance des deux extrémités de celui-ci.

En se référant aux figures 4 et 5, on va maintenant décrire le montage de la plaque d'habillage 4 sur le corps 2, déjà fixé sur la structure du camion. On commence par faire passer chaque patte 31 dans l'une des deux ouvertures 16. Ensuite, on engage les bords arrière de ces deux ouvertures 16 entre les pattes 31 et la face inférieure 21 de la plaque 4, en repoussant celle-ci vers l'arrière (flèche F₁). On rabat ensuite (flèche F₂) la plaque 4 contre la face supérieure 6 de la marche 3 en insérant simultanément la nervure de positionnement 30 dans la fente de positionnement 19.

Ensuite, chaque fourreau 34, pourvu d'un noyau 33 se trouvant dans la position illustrée à la figure 4, est enfilé dans deux trous 24 et 17. Chaque noyau 33 est alors repoussé vers le bas jusqu'à ce que sa portion 38 se trouve au niveau d'une extrémité 37 et déforme celle-ci radialement vers l'extérieur (figure 5), ce qui verrouille les moyens de fixation 18 et immobilise l'ensemble.

Sur la figure 5, cette plaque d'habillage 4 et le corps 2 sont assemblés. La plaque 4 et sa paroi verticale 28, qui est en butée contre la face avant de la marche 3, sont respectivement logées dans la portion en retrait 9 et dans l'épaulement 10, si bien que l'arête à la jonction des faces supérieure 6 et avant de la marche 3 est recouverte et protégée. Les ouvertures d'évacuation 23 débouchent dans les ouvertures 15 et 16.

Le démontage de la plaque 4 commence par l'extraction des moyens de fixation 18. Pour ce faire, on repousse encore plus vers le bas chaque noyau 33, jusqu'à ce que sa partie 38 de plus grande section ait été déplacée en dehors du fourreau 34 correspondant (position représentée en traits discontinus à la figure 5). . L'extrémité 37 de ce fourreau 34 n'étant plus déformée, le moyen de fixation 18 correspondant peut être ôté, par exemple à la main.

Le démontage de la plaque 4 se poursuit en procédant à l'inverse de son montage.

On notera que le montage et le démontage de la plaque 4 ne nécessite aucun outil spécialisé, ce qui est avantageux. Un simple tournevis, une clef ou un stylo peut suffire pour exercer sur chaque noyau 33 la poussée nécessaire pour le déplacer vers le bas.

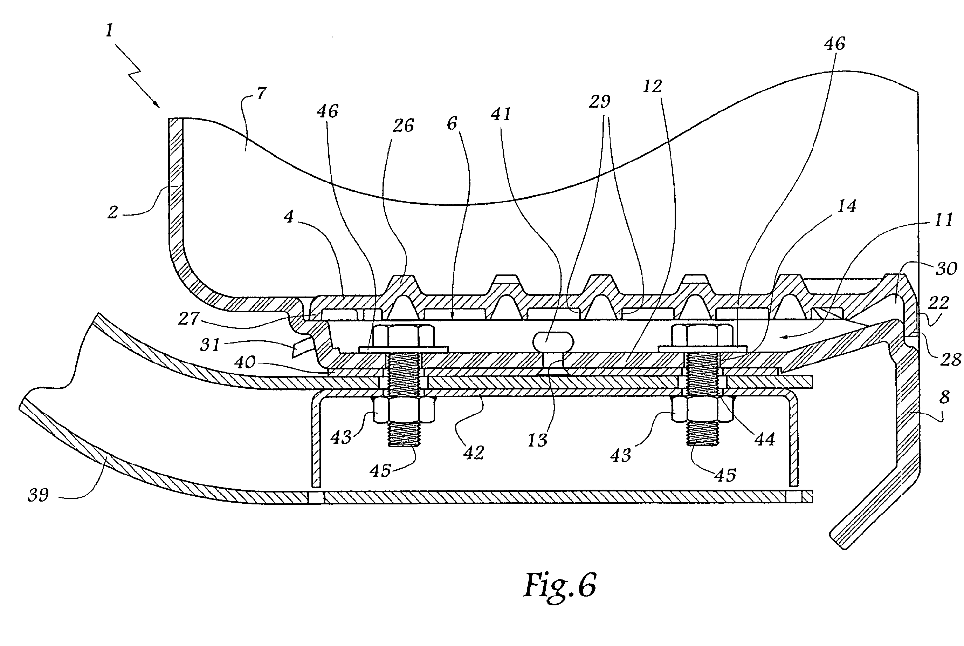

La figure 6 illustre la manière dont est monté le corps 2 sur la structure non représentée du véhicule, par l'intermédiaire de deux équerres creuses 39. La face inférieure de chaque embase de fixation 12 est pourvue d'une plaquette intermédiaire d'amortissement 40, qui est fixée au moyen d'un rivet 41 passant dans le trou 34 et qui sépare le support 2 de l'une des équerres 39.

A l'intérieur de chacune de ces équerres 39, une mâchoire mobile 42 est pourvue de deux écrous 43, chacun soudé dans l'axe de l'un de deux trous 44.

Chacune de quatre vis 45 est pourvue d'une rondelle 46 et vissée dans l'un des écrous 43, de manière à ce que chaque mâchoire 42 et deux rondelles 46 serrent entre elles l'une des embases 12, l'une des plaquettes d'amortissement 40 et une paroi de l'une des équerre 39 ensemble.

Conformément au but que l'invention entend atteindre, le marchepied qui vient d'être décrit est économique du fait des matières et des procédés employés pour sa réalisation.

Comme elle est obtenue par moulage d'une matière plastique, la plaque d'habillage 4 peut être aisément modifiée tant dans sa forme que dans sa couleur, ce qui est avantageux dans la mesure où cela permet de personnaliser aisément cette plaque 4 par exemple au moyen d'un signe distinctif, d'en modifier l'esthétique ou de l'adapter à ses futures conditions d'utilisation, par exemple en jouant sur la forme et la disposition des crampons.

En outre, le poids du marchepied 1 est faible en comparaison de ceux des marchepieds présentés à titre d'art antérieur dans l'introduction, ce qui constitue un autre avantage.

Bien que l'invention ait été décrite dans le cadre d'un marchepied latéral de camion, elle peut être également mise en oeuvre dans d'autres configurations. En particulier, le marchepied selon l'invention peut être incorporé à l'un des boucliers ou pare-chocs avant et arrière d'un véhicule routier, et/ou conçu pour être monté à l'arrière d'une remorque. Il peut également s'agir d'une échelle prévue à l'arrière de la cabine d'un camion de traction de remorques. Aussi, le marchepied selon l'invention peut comporter une ou plusieurs marches.

En outre, un marchepied prévu pour un véhicule autre qu'un camion, comme un hélicoptère, un bateau, un autocar ou un avion, ne sort pas du cadre de l'invention.

## Revendications

1. Pièce d'habillage (4) de la face supérieure (6) d'une marche (3) d'un marchepied (1), cette pièce d'habillage (4) étant réalisée en matière synthétique, et comportant des moyens (31) pour son montage sur la marche (3) de manière à être amovible,
ces moyens de montage comportant au moins une patte de retenue (31) adaptée pour venir se placer derrière un corps (2) du marchepied (1), **caractérisée en ce que** la pièce est constituée d'une plaque, et elle comporte deux trous (17) pour le passage de moyens (18) pour sa fixation sur le corps (2) du marchepied (1), ces deux trous (17) étant disposés le long de l'un de deux bords avant (22) et arrière (32) de la plaque, ladite patte de retenue (31) étant disposée à proximité de l'autre de ces deux bords avant (22) et arrière (32).

2. Pièce (4) selon la revendication 1, dans laquelle la patte de retenue (31) a une forme générale de crochet incliné vers l'arrière de la pièce et s'incurve en s'éloignant de cette pièce.

3. Pièce (4) selon la revendication 1 ou 2, **caractérisée en ce que** la patte de retenue (31) s'étend à l'arrière de son raccordement sur la plaque.

4. Pièce (4) selon l'une quelconque de revendications précédentes, **caractérisée en ce que** la patte de retenue (31) s'étend à partir d'une face inférieure (21) de la plaque et comprend une portion sensiblement parallèle à la plaque, la patte de retenue (31) et la face inférieure (21) de la plaque délimitant conjointement une fente ouverte, sensiblement parallèle à la plaque et prévue pour l'engagement d'un bord d'une ouverture (16) prévue dans le corps (2) du marchepied (1).

5. Pièce (4) selon l'une quelconque des revendications précédentes, **caractérisée en ce qu**'elle comporte un bord avant (22) longé par une paroi (28) dirigée vers le bas et destinée à venir en butée contre la face avant de la marche (3).

6. Pièce (4) selon l'une quelconque des revendications précédentes, **caractérisée en ce qu**'elle comporte des crampons (26) en saillie vers le haut.

7. Marchepied (1), comportant, d'une part, un corps (2) définissant au moins une marche (3) et, d'autre part, au moins une pièce d'habillage (4) **caractérisé en ce que** la pièce (4) est conforme à l'une quelconque des revendications 1 à 6.

8. Marchepied (1) selon la revendication 7, **caractérisé en ce que** ledit corps (2) est une coque formant un élément de carrosserie d'un véhicule destiné à être équipé du marchepied (1).

9. Marchepied (1) selon la revendication 8, **caractérisé en ce que** le corps (2) est réalisé dans un matériau composite comprenant des fibres de renforcement noyées dans une résine, par exemple polyester ou vinylester.

10. Marchepied (1) selon l'une quelconque des revendications 7 à 9, **caractérisé en ce que** la plaque (4) est fixée sur le corps (2) à l'aide desdits moyens de fixation (18) qui sont extractibles.

11. Marchepied (1) selon la revendication 10, **caractérisé en ce que** lesdits moyens de fixation (18) comportent un noyau (33) et un fourreau (34) qui délimite un passage intérieur pour le noyau (33) et comporte une collerette de butée (35) à une première extrémité, ainsi qu'une portion fendue longitudinalement et se terminant à une deuxième extrémité (37) du fourreau (34) par une zone où la section dudit passage est réduite, le noyau (33) pouvant coulisser dans le fourreau (34) jusqu'à une position de déformation radiale, vers l'extérieur, de la deuxième extrémité (37).

12. Marchepied (1) selon l'une quelconque des revendications 7 à 11, **caractérisé en ce que** ledit corps (2) comporte au moins une portion formant embase de fixation (12) du marchepied (1) sur la structure d'un véhicule, cette embase de fixation (12) étant prévue sous la plaque d'habillage (4).

## Claims

1. A cover part (4) for covering the top face (6) of a step (3) of a footrest (1), the cover part (4) being made of synthetic material and including mounting means (31) for mounting it on the step (3) so as to be removable, said mounting means including at least one retaining tab (31) adapted to be positioned behind a body (2) of the footrest (1), the cover part being **characterized in that** it is constituted by a plate, and it includes two holes (17) for passing fastener means (18) for fastening it to the body (2) of the footrest (1), said two holes (17) being disposed along one of the front (22) and rear (32) edges of the plate, said retaining tab (31) being disposed close to the other one of said front (22) and rear (32) edges.

2. A part (4) according to claim 1, in which the retaining tab (31) is generally in the form of a hook sloping towards the rear of the part and curving away from said part.

3. A part (4) according to claim 1 or claim 2, **characterized in that** said retaining tab (31) extends at the rear of its connection to the plate.

4. A part (4) according to any preceding claim, **characterized in that** the retaining tab (31) extends from a portion of a bottom face (21) of the plate and comprises a portion that is substantially parallel to the plate, the retaining tab (31) and the bottom face (21) of the plate together defining an open slot that is substantially parallel to the plate and designed for engaging an edge of an opening (16) provided in the body (2) of the footrest (1).

5. A part (4) according to any preceding claim, **characterized in that** it includes a front edge (22) having a downwardly-extending wall (28) running therealong for coming into abutment against the front face of the step (3).

6. A part (4) according to any preceding claim, **characterized in that** it includes upwardly-projecting studs (26).

7. A footrest (1) comprising firstly a body (2) defining at least one step (3), and secondly at least one cover part (4), the footrest being **characterized in that** the part (4) is in accordance with any one of claims 1 to 6.

8. A footrest (1) according to claim 7, **characterized in that** said body (2) is a shell forming a bodywork element of a vehicle that is to be fitted with the footrest (1).

9. A footrest (1) according to claim 8, **characterized in that** the body (2) is made of a composite material comprising reinforcing fibers embedded in a resin, e.g. polyester or vinylester.

10. A footrest (1) according to any one of claims 7 to 9, **characterized in that** the plate (4) is fastened on the body (2) with the help of said fastener means (18), which are extractable.

11. A footrest (1) according to claim 10, **characterized in that** each of said fastener means (18) comprises a core (33) and a sheath (34) defining an inside passage for the core (33) and including an abutment flange (35) at a first end, together with a longitudinally split portion terminating at a second end (37) of the sheath (34) in a zone in which the section of said passage is reduced, the core (33) being capable of sliding in the sheath (34) to a position in which the second end (37) is deformed radially, outwards.

12. A footrest (1) according to any one of claims 7 to 11, **characterized in that** said body (2) includes at least a portion forming a fastener base (12) for fastening the footrest (1) to the structure of a vehicle, said fastener base (12) being provided under the cover plate (4).

## Patentansprüche

1. Verkleidungsteil (4) der Oberseite (6) einer Stufe (3) eines Trittbretts (1), wobei dieser Verkleidungsteil (4) aus Kunststoff hergestellt ist und Mittel (31) zu seiner Montage auf die Stufe (3) derart aufweist, dass er abnehmbar ist, wobei diese Montagemittel mindestens eine Rückhaltepratze (31) aufweisen, die sich hinter einen Körper (2) des Trittbretts (1) platzieren kann, **dadurch gekennzeichnet, dass** der Teil aus einer Platte besteht und sie zwei Löcher (17) für das Durchgehen von Mitteln (18) zu ihrem Befestigen auf dem Körper (2) des Trittbretts (1) aufweist, wobei diese Löcher (17) entlang eines Vorderrands (22) oder Hinterrands (32) der Platte angeordnet sind, wobei die Rückhaltepratze (31) in der Nähe des anderen dieses Vorderrands (22) oder Hinterrands (32) angeordnet ist.

2. Teil (4) nach Anspruch 1, bei dem die Rückhaltepratze (31) eine allgemeine zur Rückseite des Teils geneigte Hakenform hat, die sich von diesem Teil nach innen wegbiegt.

3. Teil (4) nach Anspruch 1 oder 2, **dadurch gekennzeichnet, dass** sich die Rückhaltepratze (31) auf der Rückseite ihres Anschlusses an der Platte erstreckt.

4. Teil (4) nach einem der vorhergehenden Ansprüche, **dadurch gekennzeichnet, dass** sich die Rückhaltepratze von einer Unterseite der Platte ausgehend erstreckt und einen im Wesentlichen zu der Platte parallelen Abschnitt aufweist, wobei die Rückhaltepratze (31) und die Unterseite (21) der Platte gemeinsam einen offenen Schlitz abgrenzen, der zu der Platte im Wesentlichen parallel und zum Einfügen eines Rands einer Öffnung (16), die in dem Körper (2) des Trittbretts (1) vorgesehen ist, vorgesehen ist.

5. Teil (4) nach einem der vorhergehenden Ansprüche, **dadurch gekennzeichnet, dass** er einen Vorderrand (22) aufweist, an dem eine Wand (28) entlang führt, die nach unten gerichtet und dazu bestimmt ist, gegen die Vorderseite der Stufe (3) zum Anschlagen zu kommen.

6. Teil (4) nach einem der vorhergehenden Ansprüche, **dadurch gekennzeichnet, dass** er nach oben vorstehende Krallen (26) aufweist.

7. Trittbrett (1), das einerseits einen Körper (2) aufweist, der mindestens eine Stufe (3) aufweist, und andererseits mindestens einen Verkleidungsteil (4), **dadurch gekennzeichnet, dass** der Teil (4) einem der Ansprüche 1 bis 6 entspricht.

8. Trittbrett (1) nach Anspruch 7, **dadurch gekennzeichnet, dass** der Körper (2) eine Schale ist, die ein Karosserieelement eines Fahrzeugs bildet, das mit dem Trittbrett (1) ausgestattet werden soll.

9. Trittbrett (1) nach Anspruch 8, **dadurch gekennzeichnet, dass** der Körper (2) aus einem Verbundwerkstoff besteht, der Verstärkungsfasern aufweist, die in einem Harz eingelassen sind, zum Beispiel Polyester oder Vinylester.

10. Trittbrett (1) nach einem der Ansprüche 7 bis 9, **dadurch gekennzeichnet, dass** die Platte (4) auf dem Körper (2) mit Hilfe der Befestigungsmittel (18), die ausziehbar sind, befestigt ist.

11. Trittbrett (1) nach Anspruch 10, **dadurch gekennzeichnet, dass** die Befestigungsmittel (18) einen Kern (33) und einen Mantel (24) aufweisen, der einen Innendurchgang für den Kern (33) abgrenzt und einen Anschlagkragen (35) an einem ersten Ende aufweist, sowie einen längs geschlitzten Abschnitt, der an einem zweiten Ende (37) des Mantels (34) mit einer Zone endet, in der der Querschnitt des Durchgangs verringert ist, wobei der Kern (33) in dem Mantel (34) bis zu einer radialen Verformungsposition nach außen des zweiten Endes (37) gleiten kann.

12. Trittbrett (1) nach einem der Ansprüche 7 bis 11, **dadurch gekennzeichnet, dass** der Körper (2) mindestens einen Abschnitt aufweist, der einen Befestigungssockel (12) des Trittbretts (1) auf dem Aufbau eines Fahrzeugs bildet, wobei dieser Befestigungssockel (12) unter der Verkleidungsplatte (4) vorgesehen ist.
